# EUROPÄISCHE PATENTSCHRIFT

(11) **EP 1 508 397 B1**
(45) Veröffentlichungstag und Bekanntmachung des Hinweises auf die Patenterteilung: **07.06.2006**
(21) Anmeldenummer: 03018970.8
(22) Anmeldetag: 21.08.2003
(51) Int. Cl.: B23K 26/073, B29C 65/16

(54) **Verfahren und Vorrichtung zum simultanen Erwärmen von Materialien**
Method and apparatus for simultaneous heating of materials
Procédé et dispositif pour la chauffe simultanée de matériaux

(43) Veröffentlichungstag der Anmeldung: 23.02.2005
(73) Patentinhaber: Leister Process Technologies, 6060 Sarnen (CH)
(72) Erfinder: Chen, Jie Wei, 6055 Alpnach Dorf (CH)
(74) Vertreter: Klocke, Peter

(56) Entgegenhaltungen:
- PATENT ABSTRACTS OF JAPAN vol. 007, no. 105 (P-195), 7. Mai 1983 (1983-05-07) -& JP 58 027118 A (TOKYO SHIBAURA DENKI KK), 17. Februar 1983 (1983-02-17)

## Beschreibung

Die vorliegende Erfindung betrifft ein Verfahren und eine Vorrichtung zum simultanen Erwärmen von Materialien durch Laserstrahlung mit einer beliebigen Form der im wesentlichen flächigen Erwärmungskontur.

Es ist bekannt, wie zum Bespiel aus JP-A-58027118 Materialien mittels Laserstrahlen zum Zwecke der Materialformung zu erwärmen, beispielsweise zu schweißen, löten, schneiden usw. Es ist auch bekannt, Kunststoffe mittels Laserstrahlen, beispielsweise im Laserdurchstrahlverfahren; miteinander zu verbinden. Das Laserdurchstrahlverfahren mittels IR-Strahlung macht sich für die Verschweißung die unterschiedliche Absorption in den miteinander zu verschweißenden Teilen zu nutze. Das der Laserquelle zugewandte obere Teil ist für den Laserstrahl transparent, während das untere Teil für den Laserstrahl absorbierend ist, so dass an der Schweißstelle aufgrund der Erwärmung des unteren Teils beide Bauteile aufschmelzen und unter Druck zusammengepresst werden. Mittels des Laserstrahls können relativ feine und hochpräzise Verschweißungen, insbesondere von mikromechanischen Bauteilen, vorgenommen werden. Es ist vorteilhaft, die Verschweißung über die gesamte Schweißlinie simultan vorzunehmen, so dass bei einem Belichtungsvorgang die gesamte im wesentlichen flächige Schweißkontur erwärmt wird und die Bauteile miteinander verschweißt werden. Auf diese Weise kann der Luftspalt zwischen den Bauteilen während der Schweißung überbrückt und Unebenheiten können ausgeglichen werden.

Der vorliegenden Erfindung liegt daher die Aufgabe zugrunde, ein Verfahren und eine Vorrichtung vorzuschlagen, bei der Materialien in beliebiger Konturform der Erwärmungslinie mittels Laserstrahlen simultan erwärmt, insbesondere Kunststoffbauteile verschweißt, werden können.

Diese Aufgabe wird erfindungsgemäß durch ein Verfahren gemäß dem Hauptanspruch sowie durch eine Vorrichtung gemäß dem selbstständigen Vorrichtungsanspruch gelöst. Weitere vorteilhafte Ausgestaltungen sind den jeweiligen rückbezogenen Unteransprüchen zu entnehmen.

Gemäß dem Verfahren wird der Laserstrahl mittels optischer Elemente in Längsrichtung stirnseitig in die Wandung eines IR-Strahlen leitenden Rohres, welches an der Austrittsseite entsprechend der Kontur verformt ist, eingekoppelt und der austretende Laserstrahl anschließend mittels einer konvergierenden Linse auf die Erwärmungsebene abgebildet. Mittels des dünnwandigen Rohres findet eine Strahlformation statt, wobei das Rohr nicht nur als Lichtleiter und Strahlentransformator, sondern auch als Homogenisierungsmittel für die Lichtintensität betrachtet werden. Dazu werden die beiden Enden dieses dünnwandigen Rohres hochpoliert, um die verlustfreie Einkopplung und Auskopplung der Laserstrahlen zu gewährleisten. Der Kreisumfang des lichtleitenden Rohres entspricht der gewünschten gesamten Erwärmungskonturlänge, so dass die meist geschlossenen Erwärmungskonturen realisiert werden. Auf der einen Seite des Rohres bleibt das Rohr vorzugsweise in seiner Rundform bestehen. Diese Seite dient als Schnittstelle für die Lichteinkopplung. Die andere Seite des Rohres wird bauteilspezifisch geformt, um die gewünschte Kontur zu erzeugen Die Umformung dieser Seite kann auf verschiedene Art und Weise realisiert werden, wobei eine Möglichkeit ist, beispielsweise ein Kunststoffrohr mit Heißluft zu erwärmen, den Kunststoff leicht zu erweichen und dann mit Formhilfswerkzeugen in die gewünschte Konturfigur zu formen. Eine andere Art der Formung ist die Herstellung mittels Spritzgießwerkzeugen. Generell sind alle Materialien geeignet, die die vorstehend genannten Funktionen gewährleisten, beispielsweise Kunststoff, Glas oder auf Glas basierende Werkzeuge.

Um die homogenisierte Lichteinkopplung zu ermöglichen, kann vorzugsweise die Laserstrahlung ringförmig umgeformt werden. Dabei sollte der Kreisumfang des Ringes dem Kreisumfang des Kunststoffrohres präzise entsprechen.

Vorteilhafterweise wird die ringförmig geformte Laserstrahlung mittels einer Achsikonlinse erreicht. Diese transferiert das Laserlicht in eine Ringform und wird mittels einer anschließenden konvergierenden Linse scharf auf den Querschnitt des lichtleitenden Rohres fokussiert. Dadurch kann die Laserenergie verlustfrei in das lichtleitende Rohr eingekoppelt werden.

Der Laserstrahl, der beispielsweise aus einer Lichtfaser austritt kann über eine konvergierende Linse auf die Achsikonlinse kollimiert werden. Wenn das Laserlicht aus der andern Seite des lichtleitenden Rohres austritt, wird es mit einem größeren Divergenzwinkel ausstrahlen. Da zwischen dem Austritt des Kunststoffrohres und der Erwärmungsebene eine nicht reduzierbare Distanz vorhanden ist, wird die Austrittsfigur Vorteilhafterweise wieder mit einer konvergierenden Linse auf die Erwärmungsebene präzise abgebildet. Damit wird die gewünschte Arbeitsdistanz zwischen der Stirnseite des Rohres und Bauteil erreicht. Die Homogenisierung der Strahlenintensität wird durch die Länge des Rohres verbessert. Diese selbst kann variabel gewählt werden.

Durch die Erfindung wird eine hohe Flexibilität bei der Herstellung eines solchen lichtleitenden Rohres als Optikwerkzeug erreicht. Die Bildung von ringförmigen Laserstrahlen und die Variation des Ringumfangs ist relativ einfach realisierbar, so dass der Aufwand für die Herstellung einer derart kompletten Einrichtung gering und damit sehr vorteilhaft ist.

Diese Technik ermöglicht u.a. das simultane Verschweißen von Kunststoffbauteilen, wobei die fortschreitende Technik, bei der eine immer höhere Laserleistung aus einem Punkt ausgesendet werden kann, von Vorteil ist. Hier bietet der Faserlaser eine kleine fokussierbare Spotgröße innerhalb von 6 bis 50 µm an. Die optische Leistung dieser Laserart ist von wenigen Watt bis zu einigen Kilowatt beliebig skalierbar. Dadurch wird der technische Einsatz dieser Erfindung in einem großen Anwendungsgebiet möglich.

Nachfolgend wird die Erfindung anhand eines Ausführungsbeispiels beim Verschweißen von Kunststoffbauteilen in Verbindung mit den begleitenden Zeichnungen prinzipiell gezeigt und erläutert. Es stellen dar:
- Figur 1: eine perspektivische Ansicht der gesamten Vorrichtung;
- Figur 2: eine vergrößerte Teildarstellung vom Ende des lichtleitenden Rohres bis zu den verschweißenden Bauteilen; und
- Figur 3: eine Darstellung des Strahlengangs mit den einzelnen Strahlkegeln.

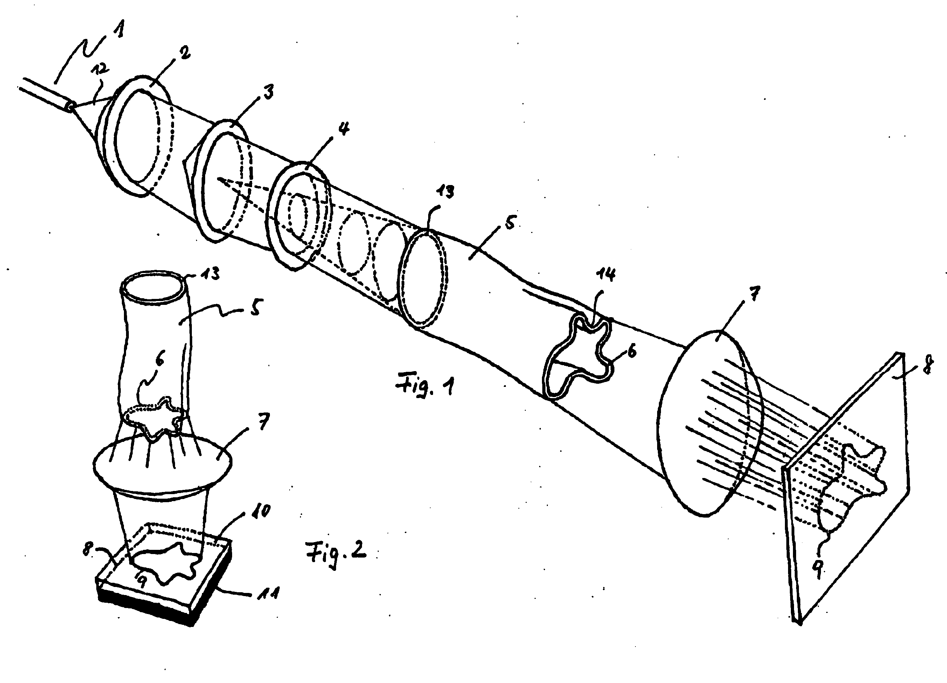

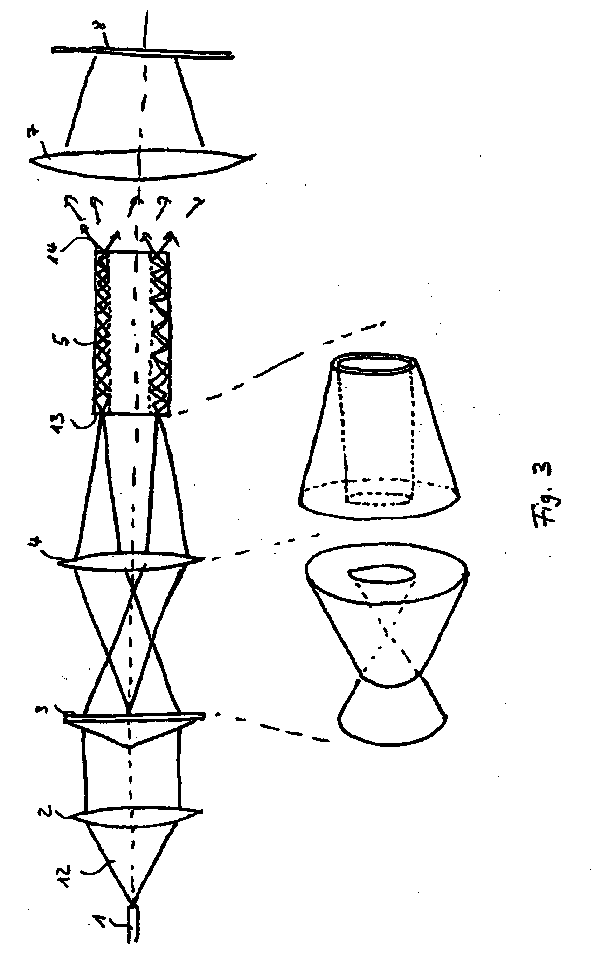

Figur 1 zeigt eine Lichtfaser 1 aus dem ein Laserstrahl 12 austritt und über eine konvergierende Linse 2 auf eine Achsikonlinse oder auch Kegellinse 2 kollimiert wird. Die Achsikonlinse 3 verformt den Laserstrahl, wie in der Figur 3 dargestellt, so dass sich ein kegelförmiger Strahlgang ausbildet. Der auf die nächste konvergierende Linse 4 auftreffende Ring wird auf das stirnseitige runde Ende 13 des lichtleitenden Rohres fokussiert und dringt dort in die Wandung ein. Es ist selbstverständlich, dass der von der Linse 4 gebildete Ring mit den Abmessungen des Rohres 5 übereinstimmen muss. Der Laserstrahl wird dann über das Rohr 5, welches auch in dem Ausführungsbeispiel als Kunststoffrohr ausgebildet ist, zu dem Austrittsende übertragen. An diesem Ende ist das Rohr 5 entsprechend der Konturen 6 verformt, so dass der dort austretende Laserstrahl diese entsprechende Kontur aufweist. Um den Laserstrahl auf die Schweißebene 8 zu fokussieren trifft dieser nach dem Austritt aus dem verformten stirnseitigen Ende 14 auf eine fokussierende und präzise abbildende Linse 7, so dass in der Schweißebene 8 die in der Figur 1 und Figur 2 dargestellte Kontur 9 entsteht.

Figur 2 zeigt das Rohr 5 in verkleinerter Darstellung mit dem runden stirnseitigen Ende 13 und dem verformten stirnseitigen Ende 14 sowie die miteinander zu verbindenden Bauteile mit dem transparenten Fügepartner 10 und dem absorbierenden Fügepartner 11.

## Patentansprüche

1. Verfahren zum simultanen Erwärmen von Materialien mit einer beliebigen, im wesentlichen flächigen Form der Erwärmungskontur mittels Laserstrahlung, **dadurch gekennzeichnet, dass** der Laserstrahl (12) mittels optischer Elemente (2 bis 4) in Längsrichtung in die Wandung eines für IR-Strahlung transparentes Rohres (5) eingekoppelt wird, welches an der Austrittsseite (14) entsprechend der gewünschten Erwärmungskontur (9) verformt ist, und der austretende Laserstrahl anschließend mittels einer konvergierenden Linse (7) auf die Erwärmungsebene (8) abgebildet wird.

2. Verfahren nach Anspruch 1, **dadurch gekennzeichnet, dass** der Laserstrahl (12) mittels optischer Elemente (2 bis 4) ringförmig umgeformt und in die Wandung eines an der Eintrittsseite (13) runden Rohres (5) eingekoppelt wird.

3. Verfahren nach Anspruch 2, **dadurch gekennzeichnet, dass** der Laserstrahl (12) mittels einer Achsikonlinse (3) in eine Ringform gebracht und anschließend mittels einer konvergierenden Linse (4) scharf auf die Stirnseite (13) der Eintrittsseite des Rohres (5) fokussiert wird.

4. Verfahren nach einem der vorangegangenen Ansprüche, **dadurch gekennzeichnet, dass** als Rohr (5) ein Kunststoffrohr verwendet und die Austrittsseite (14) durch Materialerwärmung an die gewünschte Schweißkontur (9) angepasst wird.

5. Verfahren nach Anspruch 4, **dadurch gekennzeichnet, dass** die Austrittskontur (6) des Rohres (5) mittels einer konvergierenden Linse (7) scharf auf die Fokusebene fokussiert wird.

6. Verfahren nach einem der vorangegangenen Ansprüche, **dadurch gekennzeichnet, dass** der Laserstrahl durch Faserlaser (1) erzeugt wird.

7. Vorrichtung zum simultanen Erwärmen von Materialien mit einer beliebigen Form der im wesentlichen flächigen Erwärmungskontur mittels Laserstrahlung, **gekennzeichnet durch** eine optische Anordnung (2 bis 4) zur Formung eines Laserstrahls (1) und Fokussierung auf einen rohrförmigen für IR-Strahlung transparenten Lichtleiter (5), der an dem Austrittsende (14) entsprechend der gewünschten Erwärmungskontur (9) verformt ist, sowie einer anschließenden Einrichtung (7) zum Fokussieren des austretenden Laserstrahls auf die Erwärmungsebene (8).

8. Vorrichtung nach Anspruch 7, **dadurch gekennzeichnet, dass** die Enden (13, 14) des rohrförmigen Lichtleiters (5) poliert sind.

9. Vorrichtung nach Anspruch 7 oder 8, **dadurch gekennzeichnet, dass** der rohrförmige Lichtleiter (5) auf der Eintrittsseite (13) rund ist.

10. Vorrichtung nach Anspruch 9, **dadurch gekennzeichnet, dass** die optische Anordnung eine Achsikonlinse (3) und eine konvergente Linse (4) für die Fokussierung des Laserstrahls (1) auf der Eintrittsseite (13) des Rohres (5) aufweist.

## Claims

1. Method for simultaneously heating materials by means of laser radiation having an arbitrary and substantially flat heating contour, **characterised in that** the laser beam (12) is coupled through the intermediary of optical elements (2 to 4) in the longitudinal direction into the wall of a tube (5), which is transparent to IR radiation and is deformed at the exit end (14) corresponding to the desired heating contour, and the emerging laser beam is then imaged onto the heating plane (8) through the intermediary of a converging lens (7).

2. Method according to claim 1, **characterised in that** the laser beam (12) is reshaped in an annular manner through the intermediary of optical elements (2 to 4) and is coupled into the wall of a round tube (5) at the entry end (13).

3. Method according to claim 2, **characterised in that** the laser beam (12) is moved into an annular shape through the intermediary of an axicon lens (3) and is subsequently focussed strongly onto the end face (13) at the entry end of the tube (5) through the intermediary of a converging lens (4).

4. Method according to one of the preceding claims, **characterised in that** a plastics material tube is used as tube (5) and the exit end (14) is adapted to the desired welding contour (9) by means of heating the material.

5. Method according to claim 4, **characterised in that** the exit contour (6) of the tube (5) is focussed sharply onto the focus plane through the intermediary of a converging lens (7).

6. Method according to one of the preceding claims, **characterised in that** the laser beam is generated by a fibre laser (1).

7. Apparatus for simultaneously heating materials by means of laser radiation having an arbitrary and substantially flat heating contour, **characterised by** an optical arrangement (2 to 4) for shaping a laser beam (1) and focussing it onto a tubular optical waveguide (5), which is transparent to IR radiation and is deformed at the exit end (14) corresponding to the desired heating contour (9), and an adjoining device (7) for focussing the emerging laser beam onto the temperature-rise plane (8).

8. Apparatus according to claim 7, **characterised in that** the ends (13, 14) of the tubular optical waveguide (5) are polished.

9. Apparatus according to claim 7 or 8, **characterised in that** the tubular optical waveguide (5) is round at the entry end (13).

10. Apparatus according to claim 9, **characterised in that** the optical arrangement includes an axicon lens (3) and a convergent lens (4) for the focussing of the laser beam (1) at the entry end (13) of the tube (5).

## Revendications

1. Procédé de chauffe simultanée de matériaux avec une forme quelconque, essentiellement plane du contour de chauffe, au moyen d'un rayonnement laser, **caractérisé par le fait que** le rayon laser (12) est injecté au moyen d'éléments optiques (2 à 4) en direction longitudinale dans la paroi d'un tube (5) transparent au rayonnement IR, lequel est formé selon le contour de chauffe (9) souhaité du côté sortie (14), et que le rayon laser sortant est ensuite reproduit sur le plan de chauffe (8) au moyen d'une lentille convergente (7).

2. Procédé selon la revendication 1, **caractérisé par le fait que** le rayon laser (12) est conformé en anneau au moyen d'éléments optiques (2 à 4) et injecté dans la paroi d'un tube rond (5) du côté entrée (13).

3. Procédé selon la revendication 2, **caractérisé par le fait que** le rayon laser (12) est mis en forme d'anneau au moyen d'une lentille axicon (3) et ensuite focalisé net sur la face frontale (13) du côté entrée du tube (5) au moyen d'une lentille convergente (4).

4. Procédé selon l'une des revendications précédentes, **caractérisé par le fait que** l'on utilise comme tube (5) un tube en matière plastique et que le côté sortie (14) est adapté au contour de soudage (9) souhaité par chauffe du matériau.

5. Procédé selon la revendication 4, **caractérisé par le fait que** le contour de sortie (6) du tube (5) est focalisé net sur le plan focal au moyen d'une lentille convergente (7).

6. Procédé selon l'une des revendications précédentes, **caractérisé par le fait que** le rayon laser est généré par un laser à fibre (1).

7. Dispositif de chauffe simultanée de matériaux avec une forme quelconque du contour de chauffe essentiellement plan, au moyen d'un rayonnement laser, **caractérisé par** un dispositif optique (2 à 4) pour conformer un rayon laser (1) et le focaliser sur un guide de lumière tubulaire (5) transparent au rayonnement IR qui est formé selon le contour de chauffe (9) souhaité du côté sortie (14), ainsi que par un dispositif suivant (7) pour focaliser le rayon laser émergent sur le plan de chauffe (8).

8. Dispositif selon la revendication 7, **caractérisé par le fait que** les extrémités (13, 14) du guide de lumière tubulaire (5) sont polies.

9. Dispositif selon la revendication 7 ou 8, **caractérisé par le fait que** le guide de lumière tubulaire (5) est rond du côté entrée (13).

10. Dispositif selon la revendication 9, **caractérisé par le fait que** le dispositif optique présente une lentille axicon (3) et une lentille convergente (4) pour focaliser le rayon laser (1) sur le côté entrée (13) du tube (5).
